# FASCICULE DE BREVET EUROPEEN

(11) **EP 2 099 621 B1**
(45) Date de publication et mention de la délivrance du brevet: **25.08.2010**
(21) Numéro de dépôt: 07847646.2
(22) Date de dépôt: 03.12.2007
(51) Int. Cl.: B60C 11/12

(54) **BANDE DE ROULEMENT POURVUE D'INCISIONS A DOUBLE ORIENTATION**
DOPPELAUSRICHTUNGSEINSCHNITTE UMFASSENDE LAUFFLÄCHE
TREAD COMPRISING DUAL ORIENTATION INCISIONS

(30) Priorité: 07.12.2006 FR 0610753
(43) Date de publication de la demande: 16.09.2009
(73) Titulaire: Société de Technologie MICHELIN, 63000 Clermont-Ferrand (FR); MICHELIN Recherche et Technique S.A., 1763 Granges-Paccot (CH)
(72) Inventeur: BONHOMME, Patrice, 63270 Parent (FR)
(74) Mandataire: Diernaz, Christian
(86) Numéro de dépôt international: PCT/EP2007/063135
(87) Numéro de publication internationale: WO 2008/068216

(56) Documents cités:
- EP-A- 1 580 034
- WO-A-2005/123420
- CH-A- 331 107
- DE-A1-102005 030 566
- JP-A- 2000 177 330
- JP-A- 2002 103 921
- US-A1- 2002 033 214

## Description

L'invention concerne les bandes de roulement de pneumatiques et en particulier les sculptures de telles bandes ; elle concerne également un élément moulant destiné à équiper un moule pour mouler de telles bandes de roulement.

De manière connue, un pneumatique destiné à équiper un véhicule poids lourd comprend une armature de carcasse surmontée radialement à l'extérieur d'une armature de sommet elle même surmontée d'une bande de roulement dont la surface radialement à l'extérieur constitue la surface de roulement du pneumatique et est destinée à venir en contact avec la chaussée pendant le roulage de ce pneumatique. Pour satisfaire aux exigences d'adhérence et d'évacuation de l'eau au cours d'un roulage sur une chaussée mouillée, il est connu de pourvoir la bande de roulement avec une pluralité de rainures d'orientation essentiellement longitudinale (ou circonférentielle) et transversale (c'est-à-dire faisant un angle moyen différent de zéro avec la direction longitudinale) ; ces rainures délimitent des éléments de relief (nervures, blocs) constituant la sculpture de la bande et présentant une face supérieure radialement à l'extérieur formant une partie de la surface de roulement de la bande de roulement et des faces latérales limitant lesdites rainures.

Pour certains types de pneumatiques de poids lourd et notamment ceux destinés à une utilisation sur chaussée revêtue d'eau ou en conditions hivernale, il est nécessaire d'obtenir une performance appropriée en adhérence et en motricité desdits pneumatiques tout en préservant une durée d'usage satisfaisante pour l'utilisateur. Pour augmenter l'adhérence d'un pneumatique, il est connu de réaliser dans une pluralité d'éléments de sculpture une pluralité d'incisions. Par incision, on entend ici une sorte de découpure de largeur inférieure ou égale à 1 mm, cette incision étant limitée par des parois de matière caoutchoutique en vis-à-vis. Plus le nombre d'incisions est grand et plus le nombre d'arêtes formées sur la bande de roulement est grand et plus la performance d'adhérence est améliorée. Par arête, on entend une ligne d'intersection entre l'une des parois délimitant une incision et la surface de roulement de la bande.

Par ailleurs, il est connu des incisions en forme de double vague, c'est-à-dire présentant des ondulations dans le sens de la trace de l'incision sur la surface de roulement et dans le sens de la hauteur de l'incision, qui permettent de conserver une rigidité aux blocs de gomme de la sculpture et qui permettent de maîtriser l'usure du pneu.

Pour conserver le plus longtemps possible les performances d'adhérence de la bande de roulement au fur et à mesure de son usure, il est indispensable de prévoir des incisions qui ont des profondeurs égales ou très proches de la profondeur des rainures longitudinales (cette dernière profondeur pouvant définir l'épaisseur utile de la bande de roulement d'un point de vue de la quantité de gomme à user).

Un véhicule pourvu de pneumatiques est amené à solliciter ses pneumatiques à la fois dans la direction longitudinale de la bande de roulement (c'est-à-dire dans une direction tangente à la direction circonférentielle sur le pneumatique) et dans la direction transversale (c'est-à-dire dans une direction parallèle à l'axe de rotation du pneumatique). Les éléments de relief sont sollicités par des efforts exercés par le sol sur la surface de roulement dans la direction longitudinale lorsque le pneumatique est soumis à des efforts moteur pour faire avancer le véhicule ou des efforts freineurs pour réduire la vitesse dudit véhicule ou encore l'arrêter complètement. Ces efforts sollicitent les arêtes orientées principalement dans une direction transversale (c'est-à-dire dans une direction faisant un angle inférieur à 45 degrés avec la direction axiale).

Les mêmes éléments de relief sont en outre sollicités par des efforts exercés par le sol sur le pneumatique dans une direction transversale lors de manoeuvres de virage. Ces efforts transversaux sollicitent les arêtes orientées principalement dans la direction longitudinale (c'est-à-dire faisant un angle au plus égal à 45 degrés avec la direction longitudinale).

Comme cela a déjà été dit, il est en outre indispensable de "régler" la bande de roulement de manière à ce que l'usure de la bande soit la plus régulière possible (c'est-à-dire que l'usure affecte de manière homogène l'ensemble de la surface de roulement sans créer de zones d'usure plus marquée) et que cette usure soit la plus lente possible. Ainsi, il est possible de conférer à la bande de roulement une durée d'utilisation satisfaisante pour l'utilisateur. Augmenter la durée d'utilisation offre, pour l'utilisateur, l'avantage de repousser dans le temps l'opération de rechapage consistant à poser une nouvelle bande de roulement sur le pneumatique après préparation.

Un objectif de la présente invention est de proposer une bande de roulement dont la sculpture permet d'atteindre une amélioration sensible des performances d'adhérence en sollicitations longitudinale et transversale pendant toute la durée d'utilisation du pneumatique tout en maintenant des durées d'utilisation sur usure qui soient satisfaisantes pour l'usager.
Le document US-A-2002/033214 décrit les caractéristiques techniques du préambule de la revendication 1.

Définitions:

Une rainure est l'espace délimité par des parois de matériau en vis-à-vis et distante l'une de l'autre d'une largeur moyenne supérieure ou égale à 1 mm ; en général, les parois d'une telle rainure ne viennent pas en contact dans les conditions usuelles d'utilisation du pneumatique.

Une incision est l'espace délimité par des parois de matériau distante l'une de l'autre d'une largeur moyenne inférieure à 1 mm, et le plus souvent inférieure à 0.7 mm ; en général, les parois d'une telle incision sont en contact dans au moins certaines des conditions usuelles d'utilisation du pneumatique.

Dans un cas comme dans l'autre, une rainure ou une incision peut déboucher dans une seule autre rainure ou incision, ou encore déboucher dans deux rainures ou incisions ou bien ne pas déboucher.

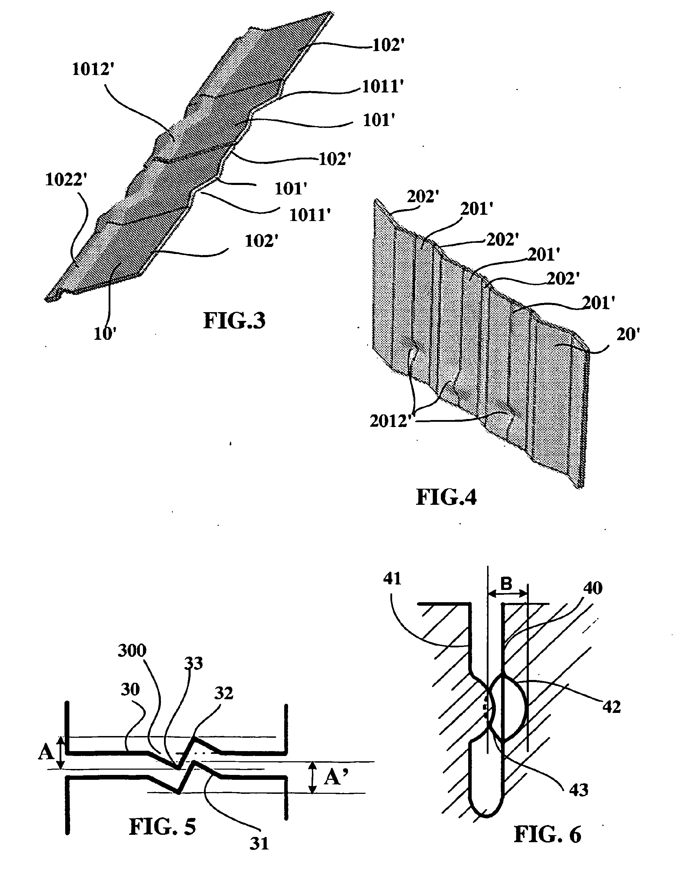

Une incision est dite présenter une ondulation de surface (Fig 5) dès lors qu'il y a une variation locale de la trace de l'incision sur la surface de roulement autour de la ligne moyenne reliant les points d'extrémité de ladite trace ; de part et d'autre du tracé moyen de l'incision sur la surface de roulement (ligne géométrique des moindres carrés établie sur les points d'une des parois délimitant l'incision), on trace des lignes parallèles entre elles et passant par les points les plus éloignés du tracé moyen et on peut ainsi mesurer l'amplitude maximale A de l'ondulation ou du zigzag.

Une incision est dite présenter un zigzag ou une ondulation dans la profondeur (voir Fig 6), dès lors qu'il y a une variation locale du tracé de l'incision dans la hauteur (c'est-à-dire la profondeur de la bande de roulement). L'amplitude totale de l'ondulation mesure la distance maximale mesurée sur une paroi de matériau entre des points de ladite paroi dans une direction perpendiculaire à une surface moyenne représentative de l'incision.

L'objectif est atteint avec une bande de roulement ayant une surface, dite surface de roulement, cette bande étant destinée à venir en contact avec la chaussée pendant le roulage.

Cette bande de roulement est pourvue d'élément de relief délimitant des rainures, certains de ces éléments ayant la forme de blocs. Chaque bloc est délimité par plusieurs faces latérales. Au moins une pluralité de blocs comprennent au moins une première et au moins une deuxième incision, c'est-à-dire une découpure de largeur moyenne inférieure à 1 mm. La au moins une première incision est délimitée par des parois de matière caoutchoutique, chacune desdites parois comprenant au moins deux parties non planes, chaque partie non plane étant disjointes des autres parties non planes par une partie intermédiaire, lesdites parties non planes ayant des formes géométriques présentant au moins une ondulation ou zigzag en surface de la bande de roulement d'amplitude totale A et au moins une ondulation ou zigzag dans la profondeur de la bande de roulement d'amplitude totale B, la partie intermédiaire entre deux parties non planes d'une première incision ayant un géométrie présentant au moins une ondulation ou zigzag dans la profondeur de la bande de roulement d'amplitude totale B' et étant dépourvue d'ondulation sur la surface de la bande.

La au moins une deuxième incision est délimitée par des parois de matière caoutchoutique, chacune desdites parois comprenant au moins deux parties non planes PNP. Chacune de ces parties non planes est disjointe des autres parties non planes par une partie intermédiaire et a une forme géométrique présentant au moins une déformation en relief selon une direction perpendiculaire à la surface moyenne de ladite partie, cette déformation en relief ayant une amplitude maximale C. Chaque partie intermédiaire de la au moins une deuxième incision située entre deux parties non planes de ladite deuxième incision est dépourvue de toute déformation en relief.

De plus, la au moins une première incision coupe au moins une deuxième incision pour former au moins une intersection et diviser l'élément de relief sur lequel elles sont réalisées en plusieurs éléments de volume, chaque intersection étant réalisée entre une partie intermédiaire de la au moins une première incision et une partie intermédiaire de la au moins une deuxième incision.

Enfin, les plans moyens des premières incisions d'un bloc sont sensiblement parallèles à certaines des faces latérales dudit bloc et les plans moyens des deuxièmes incisions sont sensiblement parallèles aux autres faces latérales du même bloc de manière à diviser l'élément de relief en plusieurs éléments de matière ayant sensiblement un même volume. Cette bande de roulement est caractérisée en ce que les points d'amplitude maximale de la au moins une ondulation dans la profondeur des premières incisions sont localisés entre 25 % et 50 % de la profondeur de l'incision à partir de la surface de roulement de la bande de roulement.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une partie d'une bande de roulement selon l'invention ;

La figure 2 montre une lame destinée à mouler les incisions des blocs de la bande de roulement représentée à la figure 1 ;

La figure 3 montre une vue d'une première lame moulant une première incision des blocs de la bande de roulement représentée à la figure 1 ;

La figure 4 montre une vue d'une deuxième lame moulant une deuxième incision des blocs de la bande de roulement représentée à la figure 1 ;

La figure 5 montre la trace sur une surface de roulement d'une incision présentant une variation locale de géométrie de surface ;

La figure 6 montre la trace dans la profondeur d'une bande de roulement d'une incision présentant une variation locale de géométrie dans la profondeur.

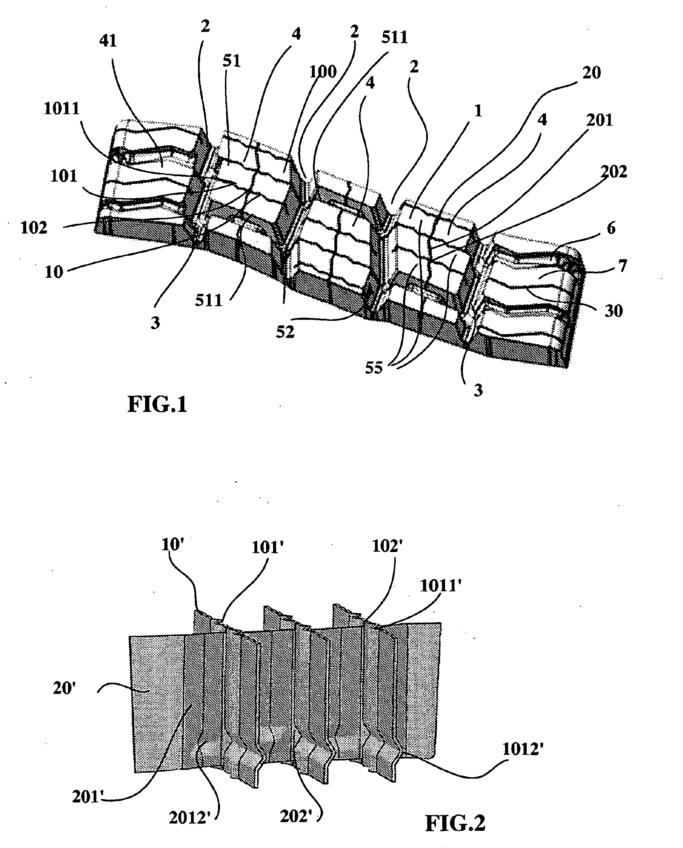

La figure 1 montre une vue partielle d'une surface de roulement 100 d'une bande de roulement 1 à l'état neuf pour un pneumatique de dimension 315/80 R 22.5. Cette bande de roulement 1 selon l'invention comprend une pluralité de rainures d'orientation longitudinale et transversale 2, 3 qui délimitent une pluralité de blocs 5 dont les surfaces radialement à l'extérieur 51 forment la surface de roulement de la bande. Cette bande 1 comprend quatre rainures longitudinales 2 (correspondant à la direction circonférentielle sur le pneumatique, indiquée par l'axe XX') ayant une profondeur égale à 14 mm (les profondeurs sont mesurées sur une bande de roulement qui est neuve, c'est-à-dire qui n'a pas encore roulé). La bande comprend une rangée axialement à l'extérieur et de chaque côté pour former des bords de ladite bande. Ces bords sont pourvus de rainures transversales 6 délimitant une pluralité de blocs 7. Chacun des blocs 7 des bords est pourvu d'une incision 30 présentant un zigzag en surface ; afin de conserver une rigidité appropriée, ces blocs 7 des bords sont reliés entre eux sur une partie seulement de leur hauteur par des ponts de matériau.

Entre les bords de la bande de roulement 1, il est prévu trois rangées intermédiaires de blocs 5, chacun de ces blocs étant limité par six faces latérales 52 et une face de contact 51 de forme polygonale située radialement à l'extérieur. La plus grande dimension de la face de contact 51 de ces blocs 5 des rangées intermédiaires est orientée longitudinalement suivant XX'. Les arêtes 511 d'entrée et de sortie dans le contact sont inclinées par rapport à la direction axiale.

Sur chaque bloc des trois rangées situées entre les bords, on distingue, sur la surface 51 radialement à l'extérieur, les traces de premières incisions 10 de profondeur égale à 8mm et celle d'une deuxième incision 20 de profondeur 7.5mm, les premières incisions 10 au nombre de trois étant orientées transversalement et sensiblement parallèlement aux arêtes du bloc. La deuxième incision 20 présente, sur la face de contact 51, une trace coupant les traces des trois premières incisions 10 sensiblement par leur milieu, cette deuxième incision 20 étant sensiblement parallèle à la direction longitudinale (ou circonférentielle sur le pneumatique pourvu de la bande de roulement décrite).

On distingue en outre sur les faces latérales 52 des blocs 5 les traces en zigzag dans la profondeur de la bande des premières incisions 10. Ces premières incisions 10 présentent donc une double vague d'ondulations en zigzag, à la fois dans la direction de la profondeur et sur la surface de roulement. On voit en outre que la trace de la deuxième incision forme un zigzag sur la surface de roulement et coupe les traces des premières incisions.

Les premières incision 10 sont délimitées par des parois de matière caoutchoutique, chacune desdites parois comprenant au moins deux parties non planes 101, chaque partie non plane étant disjointes des autres parties non planes par une partie intermédiaire 102, lesdites parties non planes 101 ayant des formes géométriques présentant deux ondulations 1011 en surface de la bande de roulement d'amplitude totale A et une ondulation 1012 dans la profondeur de la bande de roulement d'amplitude totale B. La partie intermédiaire 102 entre deux parties non planes 101 d'une première incision 10 a une géométrie comportant une ondulation 1022 dans la profondeur de la bande de roulement d'amplitude totale B' et est dépourvue d'ondulation sur la surface 100 de la bande.

La deuxième incision 20 est délimitée par des parois de matière caoutchoutique, chacune desdites parois comprenant trois parties non planes 201, chaque partie non plane étant disjointe des autres parties non planes par une partie intermédiaire 202, lesdites parties non planes 202 ayant des formes géométriques présentant une ondulation 2012 (non visible sur la figure 1) dans la profondeur de la bande de roulement d'amplitude maximale C. En outre, chaque partie intermédiaire 202 de la deuxième incision 20 située entre deux parties non planes 201 de ladite deuxième incision est dépourvue de toute déformation ou ondulation.

Chaque première incision 10 coupe la deuxième incision 20 pour former au une intersection et ainsi diviser l'élément de relief 5 en plusieurs éléments de volume 55, chaque intersection étant réalisée entre une partie intermédiaire 102 de la première incision 10 et une partie intermédiaire 202 de la deuxième incision 20.

Pour faciliter la compréhension de l'invention, on a représenté avec les figures 2, 3, 4 les lames métalliques utilisées dans le moule pour mouler la bande de roulement montrée avec la figure 1. Par ailleurs, les références numériques sont employées à la fois pour désigner lesdites parties de lames et les parties moulées correspondantes dans la bande de roulement. Par exemple, l'incision 10 est moulée avec la lame 10'.

Les lames métalliques forment dans un même bloc 5, pendant le moulage de la bande de roulement 1, des parois délimitant des premières incisions 10 et des parois délimitant une deuxième incision 20.

Pour mouler chaque bloc de la figure 1, on emploie une combinaison de quatre lames 10', 20' telles que représentées sur la figure 2, ces lames ayant des épaisseurs moyennes égales à 0.6 mm.

Trois premières lames 10' de forme générale plane présentent localement des déformations autour de cette forme plane pour mouler les trois premières incisions 10 visibles sur la figure 1. Comme cela est visible à la figure 3, chacune de ces trois premières lames 10' a des parois principales comprenant au moins deux parties non planes 101' pour mouler des parties d'incision 101 non planes, chaque partie non plane 101' étant disjointe des autres parties non planes par une partie intermédiaire 102'.

Ces parties non planes 101' ont des formes géométriques présentant quatre zigzags 1011' visibles par leur trace sur la surface de la bande de roulement (que cette surface de roulement soit neuve ou partiellement usée). L'amplitude totale A de ces zigzags sur une face de matière est ici égale à 2 mm (cette amplitude mesure l'écart entre deux plans parallèles passant par les points de ladite face les plus éloignés dans une direction perpendiculaire à la surface moyenne de la face). En outre, ces mêmes parties non planes 101' des premières lames 10' comprennent, en combinaison avec les zigzags 1011' de surface, un zigzag 1012' dans la profondeur (environ à mi profondeur de la l'incision). Ce zigzag 1012' dans la profondeur a une amplitude totale B, mesurée sur une face de matière, égale dans l'exemple décrit à 1.3 mm.

La partie intermédiaire 102' entre deux parties non planes 101' d'une première lame 10' a une géométrie présentant au moins une ondulation 1021' dans la profondeur de la bande de roulement d'amplitude totale B égale à 1.3 mm. Cette partie intermédiaire 102' est par contre dépourvue de zigzag ou d'ondulation dans tout plan de coupe perpendiculaire à la hauteur de la lame (un plan de coupe perpendiculaire à la hauteur de la lame correspond sensiblement à un plan tangent à la surface de roulement de la bande).

La deuxième lame 20' de forme générale plane, visible sur la figure 4, comprend trois parties non planes 201', chaque partie non plane étant disjointe des autres parties non planes par une partie intermédiaire 202'. Chaque partie non plane 201' de la deuxième lame 20' a une forme géométrique présentant localement au moins une déformation en relief 2012' selon une direction perpendiculaire à la surface moyenne de ladite partie.

Les déformations en relief 2012' sont formées en alternance en creux et en relief sur les trois parties non planes 201' de la deuxième lame ; l'amplitude maximale C, mesurant la distance maximale en deux points les plus éloignés desdites déformations sur une même paroi de matière caoutchouteuse, est égale dans le cas présent à 4 mm. Chaque partie intermédiaire 202' de la deuxième lame 20' située entre deux parties non planes 201' de ladite deuxième lame est entièrement dépourvue de toute déformation en relief.

Pour mouler un bloc 5 des rangées intermédiaires selon la figure 1, on assemble les trois premières lames 10' avec la deuxième lame 20' de sorte que chaque partie intermédiaire 202' de la deuxième lame 20' est portée par une partie intermédiaire 102' d'une première lame 10' dépourvue de zigzag de surface.

D'un point de vue pratique, la fabrication de la lame pour le moulage des incisions telles que montrées à la figure 1 se fait par assemblage des trois premières lames 10' et de la deuxième lame 20'. Cet assemblage est fait par morceaux : la deuxième lame 20' est découpée au milieu de chaque partie intermédiaire 202', et les morceaux ainsi obtenus sont soudés sur une première lame 10' de part et d'autre de cette première lame. L'angle entre les premières lames et la deuxième lame est sensiblement égal à 90 degrés afin d'éviter le moulage sur le bloc d'une partie de matière caoutchouteuse présentant une pointe de forme effilée et fragile mécaniquement.

Cette combinaison de premières et deuxième lames permet d'obtenir au cours du moulage une division d'un bloc 5 en plusieurs parties 55 quasiment de même volume et qui, selon la direction de sollicitation, vont être ou non reliées mécaniquement entre elles. Par reliées mécaniquement, on entend que les parois en vis-à-vis d'une même incision coopèrent entre elles pour assurer un niveau approprié de rigidité.

L'invention permet tout en créant un nombre important d'arêtes de matière, favorables pour les performances de motricité, freinage et tenue de route, de limiter le plus possible les mouvements relatifs entre parois en vis-à-vis afin de limiter les usures irrégulières (c'est-à-dire les usures localisée et amplifiées par rapport au reste des éléments de la sculpture).

Avantageusement, les plans moyens des premières incisions 10 sont sensiblement parallèles à certaines des faces latérales d'un élément de relief de la bande de roulement et les plans moyens des deuxièmes incisions 20 sont sensiblement parallèles aux autres faces latérales du même élément, de manière à diviser cet élément de relief en plusieurs parties ayant sensiblement un même volume.

Préférentiellement, les points d'amplitude maximale de la au moins une ondulation dans la profondeur des premières incisions est localisée entre 25 et 50% (dans le cas présent 35 %) de la hauteur de l'incision à partir de la surface de roulement de la bande de roulement (la hauteur de l'incision correspond à la profondeur sur la bande de roulement).

Préférentiellement, la au moins une déformation en relief des deuxièmes incisions est localisée entre 25 % et 50 % (45% dans le cas présent) de la hauteur de l'incision à partir de la surface de roulement de la bande de roulement.

Les blocs 5 des rangées intermédiaires sont en outre reliés entre eux par un pont de matière caoutchoutique de hauteur sensiblement égale à la moitié de la profondeur des rainures (ces ponts s'étendent à partir du fond des rainures).

Sur la figure 5 on a représenté la trace d'une incision sur la surface de roulement d'une bande de roulement, ce tracé comprenant plusieurs zigzags. Sur cette surface, on distingue, deux lignes 30, 31 formant des arêtes en vis-à-vis. Ces lignes 30, 31 ont des tracés identiques. Chaque ligne a un tracé formant zigzag avec un creux 32 et une bosse 33 dans l'exemple montré. L'amplitude A maximale est mesurée sur le tracé de la ligne 30 entre les points les plus éloignés l'un de l'autre dans une direction perpendiculaire à la ligne moyenne dudit tracé. Cette ligne moyenne 300 (en pointillé sur la figure 5) est obtenue comme la ligne géométrique des moindres carrés établie sur les points du tracé de l'arête 30. La ligne 31 en vis-à-vis de la ligne 30 a la même amplitude maximale d'ondulation dans le cas présent ; elle pourrait toutefois avoir une amplitude différente A'.

Sur la figure 6, on a représenté une incision dans un plan de coupe perpendiculaire à la surface de roulement. Dans ce plan de coupe l'incision - montrant la profondeur de l'incision - on distingue deux tracés 40, 41 en vis-à-vis. Dans le cas décrit, l'incision, dont on une coupe est montrée, comprend, sur chacune des faces de matière la délimitant, des reliefs en creux 42 et en bosse 43. Sur une face, l'amplitude maximale B de l'ondulation est mesurée entre les points les plus éloignés dans une direction perpendiculaire à un plan moyen à ladite face.

L'invention n'est pas limitée aux exemples décrits et représentés et diverses modifications peuvent y être apportées sans sortir de son cadre.

## Revendications

1. Bande de roulement (1) ayant une surface de roulement (100) destinée à venir en contact avec la chaussée pendant le roulage, cette bande de roulement étant pourvue d'éléments de relief, une pluralité de ces éléments de reliefs (5) étant pourvus avec au moins une première (10)et au moins une deuxième incision (20),
la au moins une première incision (10) étant délimitée par des parois de matière caoutchoutique, chacune desdites parois comprenant au moins deux parties non planes (101), chaque partie non plane étant disjointes des autres parties non planes par une partie intermédiaire (102), lesdites parties non planes (101) ayant des formes géométriques présentant au moins une ondulation (1011) en surface de la bande de roulement d'amplitude totale A et au moins une ondulation (1012) dans la profondeur de la bande de roulement d'amplitude totale B, la partie intermédiaire (102) entre deux parties non planes (101) d'une première incision (10) ayant une géométrie présentant au moins une ondulation (1022) dans la profondeur de la bande de roulement d'amplitude totale B' et étant dépourvue d'ondulation sur la surface de la bande,
la au moins une deuxième incision (20) étant délimitée par des parois de matière caoutchoutique, chacune desdites parois comprenant au moins deux parties non planes (201), chaque partie non plane étant disjointe des autres parties non planes par une partie intermédiaire (202), lesdites parties non planes (202) ayant des formes géométriques présentant au moins une ondulation (2012) dans la profondeur de la bande de roulement d'amplitude maximale C, chaque partie intermédiaire (202) de la au moins une deuxième incision (20) située entre deux parties non planes (201) de ladite deuxième incision étant dépourvue de toute déformation en relief,
la au moins une première incision (10) coupant au moins une deuxième incision (20) pour former au moins une intersection et ainsi diviser l'élément de relief (5) sur lequel elles sont réalisées en plusieurs éléments de volume (55), chaque intersection étant réalisée entre une partie intermédiaire (102) de la au moins une première incision (10) et une partie intermédiaire (202) de la au moins une deuxième incision (20) l'élément de relief (5) pourvu d'incisions étant un bloc délimité par plusieurs faces latérales (52), les plans moyens des premières incisions (10) étant sensiblement parallèles à certaines des faces latérales et les plans moyens des deuxièmes incisions (20) étant sensiblement parallèles aux autres faces latérales de manière à diviser l'élément de relief en plusieurs éléments de matière (55) ayant sensiblement un même volume, cette bande étant **caractérisée en ce que** les points d'amplitude maximale de la au moins une ondulation (1022) dans la profondeur des premières incisions (10) sont localisés entre 25 % et 50 % de la profondeur de l'incision à partir de la surface de roulement (100) de la bande de roulement (1).

2. Bande de roulement selon la revendication 1 **caractérisée en ce que** la au moins une déformation en relief (2012) des deuxièmes incisions (20) est localisée entre 25 % et 50 % de la profondeur de l'incision à partir de la surface de roulement (100) de la bande de roulement (1).

3. Bande de roulement selon l'une quelconque des revendications 1 ou 2 **caractérisée en ce que** chaque deuxième incision (20) est pourvue d'au moins deux déformations en relief (2012), lesdites déformations en relief formant alternativement des creux et des bosses sur ladite deuxième incision (20).

4. Bande de roulement selon l'une des revendications 1 à 3 **caractérisée en ce que** l'amplitude totale B de l'ondulation dans la profondeur (1022) des parties non planes (101) des premières incisions (10) est égale à l'amplitude B' de l'ondulation dans la profondeur des parties intermédiaires desdites premières incisions (10).

## Claims

1. Tread (1) having a running surface (100) intended to come into contact with the roadway during running, this tread being provided with raised elements, a plurality of these raised elements (5) being provided with at least one first incision (10) and at least one second incision (20),
the at least one first incision (10) being delimited by walls of rubbery material, each of the said walls comprising at least two non-planar parts (101), each non-planar part being separated from the other non-planar parts by an intermediate part (102), the said non-planar parts (101) having geometric shapes exhibiting at least one undulation (1011) at the surface of the tread of total amplitude A and at least one undulation (1012) in the depth of the tread with total amplitude B, the intermediate part (102) between two non-planar parts (101) of a first incision (10) having a geometry exhibiting at least one undulation (1022) in the depth of the tread of total amplitude B' and no undulation on the surface of the tread,
the at least one second incision (20) being delimited by walls of rubbery material, each of the said walls comprising at least two non-planar parts (201), each non-planar part being separated from the other non-planar parts by an intermediate part (202), the said non-planar parts (202) having geometric shapes exhibiting at least one undulation (2012) in the depth of the tread of maximum amplitude C, each intermediate part (202) of the at least one second incision (20) situated between two non-planar parts (201) of the said second incision having no deformation in relief,
the at least one first incision (10) intersecting at least one second incision (20) to form at least one intersection and thus divide the raised element (5) in which they are made into several volume elements (55), each intersection being created between an intermediate part (102) of the at least one first incision (10) and an intermediate part (202) of the at least one second incision (20), the raised element (5) provided with incisions being a block delimited by several lateral faces (52), the mean planes of the first incisions (10) being substantially parallel to some of the lateral faces and the mean planes of the second incisions (20) being substantially parallel to the other lateral faces so as to divide the raised element into several material elements (55) of substantially the same volume, this tread being **characterized in that** the points of maximum amplitude of the at least one undulation (1022) in the depth of the first incisions (10) are situated at between 25% and 50% of the depth of the incision measured from the running surface (100) of the tread (1).

2. Tread according to Claim 1, **characterized in that** the at least one deformation in relief (2012) of the second incisions (20) is situated at between 25% and 50% of the depth of the incision measured from the running surface (100) of the tread (1).

3. Tread according to either one of Claims 1 and 2, **characterized in that** each second incision (20) is provided with at least two deformations in relief (2012), the said deformations in relief alternately forming recesses and crests on the said second incision (20).

4. Tread according to one of Claims 1 to 3, **characterized in that** the total amplitude B of the undulation in the depth (2022) of the non-planar parts (101) of the first incisions (10) is equal to the amplitude B' of the undulation in the depth of the intermediate parts of the said first incisions (10).

## Patentansprüche

1. Laufstreifen (1) mit einer Lauffläche (100), die dazu bestimmt ist, während des Rollens mit der Straße in Kontakt zu kommen, wobei dieser Laufstreifen mit Reliefelementen versehen ist, wobei mehrere dieser Reliefelemente (5) mit mindestens einem ersten (10) und mindestens einem zweiten Einschnitt (20) versehen sind, wobei der mindestens eine erste Einschnitt (10) von Wänden aus Kautschukmaterial begrenzt wird, wobei jede der Wände mindestens zwei nicht ebene Bereiche (101) enthält, wobei jeder nicht ebene Bereich von den anderen nicht ebenen Bereichen durch einen Zwischenbereich (102) getrennt ist, wobei die nicht ebenen Bereiche (101) geometrische Formen haben, die mindestens eine Wellenform (1011) an der Oberfläche des Laufstreifens mit einer Gesamtamplitude A und mindestens eine Wellenform (1012) in der Tiefe des Laufstreifens mit einer Gesamtamplitude B aufweisen, wobei der Zwischenbereich (102) zwischen zwei nicht ebenen Bereichen (101) eines ersten Einschnitts (10) eine Geometrie hat, die mindestens eine Wellenform (1022) in der Tiefe des Laufstreifens mit einer Gesamtamplitude B' aufweist und keine Wellenform an der Oberfläche des Streifens hat,
wobei der mindestens eine zweite Einschnitt (20) von Wänden aus Kautschukmaterial begrenzt wird, wobei jede der Wände mindestens zwei nicht ebene Bereiche (201) enthält, wobei jeder nicht ebene Bereich von den anderen nicht ebenen Bereichen durch einen Zwischenbereich (202) getrennt ist, wobei die nicht ebenen Bereiche (201) geometrische Formen haben, die mindestens eine Wellenform (2012) in der Tiefe des Laufstreifens mit einer maximalen Amplitude C aufweisen, wobei jeder Zwischenbereich (202) des mindestens einen zweiten Einschnitts (20), der sich zwischen zwei nicht ebenen Bereichen (201) des zweiten Einschnitts befindet, keine Reliefverformung aufweist, wobei der mindestens eine erste Einschnitt (10) mindestens einen zweiten Einschnitt (20) schneidet, um mindestens eine Schnittstelle zu bilden und so das Reliefelement (5), auf dem sie hergestellt sind, in mehrere Volumenelemente (55) zu teilen, wobei jede Schnittstelle zwischen einem Zwischenbereich (102) des mindestens einen ersten Einschnitts (10) und einem Zwischenbereich (202) des mindestens einen zweiten Einschnitts (20) hergestellt ist, wobei das mit Einschnitten versehene Reliefelement (5) ein von mehreren Seitenflächen (52) begrenzter Block ist, wobei die Mittelebenen der ersten Einschnitte (10) im Wesentlichen parallel zu bestimmten der Seitenflächen sind, und die Mittelebenen der zweiten Einschnitte (20) im Wesentlichen parallel zu den anderen Seitenflächen sind, um das Reliefelement in mehrere Materialelemente (55) zu teilen, die im Wesentlichen das gleiche Volumen haben, wobei dieser Streifen **dadurch gekennzeichnet ist, dass** die Punkte maximaler Amplitude der mindestens einen Wellenform (1022) in der Tiefe der ersten Einschnitte (10) sich auf zwischen 25 % und 50 % der Tiefe des Einschnitts ausgehend von der Lauffläche (100) des Laufstreifens (1) befindet.

2. Laufstreifen nach Anspruch 1, **dadurch gekennzeichnet, dass** die mindestens eine Reliefverformung (2012) der zweiten Einschnitte (20) sich auf zwischen 25 % und 50 % der Tiefe des Einschnitts ausgehend von der Lauffläche (100) des Laufstreifens (1) befindet.

3. Laufstreifen nach einem der Ansprüche 1 oder 2, **dadurch gekennzeichnet, dass** jeder zweite Einschnitt (20) mit mindestens zwei Reliefverformungen (2012) versehen ist, wobei die Reliefverformungen abwechselnd Vertiefungen und Erhöhungen auf dem zweiten Einschnitt (20) bilden.

4. Laufstreifen nach einem der Ansprüche 1 bis 3, **dadurch gekennzeichnet, dass** die Gesamtamplitude B der Wellenform in der Tiefe (1022) der nicht ebenen Bereiche (101) der ersten Einschnitte (10) gleich der Amplitude B' der Wellenform in der Tiefe der Zwischenbereiche der ersten Einschnitte (10) ist.
